# EUROPEAN PATENT APPLICATION

(11) **EP 2 833 432 A2**
(43) Date of publication of application: **04.02.2015**
(21) Application number: 13195841.5
(22) Date of filing: 05.12.2013
(51) Int. Cl.: H01M 2/10, H01M 2/20

(54) **Battery pack**

(30) Priority: 31.07.2013 US 201361860543 P; 20.11.2013 US 201314085015
(71) Applicant: Samsung SDI Co., Ltd., Yongin-si, Gyeonggi-do (KR)
(72) Inventor: Hu, Sunhye, Gyeonggi-do (KR)
(74) Representative: Mounteney, Simon James

(57) **Abstract**

The present invention provides a battery pack including first and second battery cells, each including two opposed end surfaces and a terminal support surface extending between the end surfaces. One of the end surfaces of the first battery cell includes a first terminal region having a first terminal thereon and one of the end surfaces of the second battery cell includes a second terminal region having a second terminal thereon. The cells are connected by a conductive tab including first and second connection regions electrically connected to the first and second terminal regions respectively, first and second contacting regions extending from the first and second connection regions and closely contacting the terminal support surface, a first extension region connecting the first and second connection regions and a second extension region connecting the first and second contacting regions.

## Description

### Field of the Invention

The present invention relates to a battery pack.

### Description of the Related Art

In general, a battery pack includes a plurality of battery cells, a battery monitoring system board and a housing accommodating the plurality of battery cells and the battery monitoring system board. Here, the plurality of battery cells are electrically connected to each other by a conductive tab. The conductive tab is electrically connected to the battery monitoring system board by a wire.

Meanwhile, in accordance with the recent tendency toward a large-capacity, high-performance battery pack, charge current and discharge current are gradually increasing, and a conductive tab is also required to allow higher currents to flow therein. However, since the conductive tab is generally designed to have a smaller area and/or thickness than a diameter and/or thickness of a battery cell, there may be a problem with the recently developed large-capacity, high-performance battery pack in that the conductive tab is melted due to the high current or over current.

In addition, in order to connect a conductive tab to a battery cell, a specially designed jig for mounting a conductive tab has conventionally been used in temporarily mounting the conductive tab in the battery cell and a specially designed jig for connecting the conductive tab has conventionally been used in connecting the conductive tab to the battery cell. Accordingly, in the conventional art, a plurality of specially designed jigs are required to connect the conductive tab to the battery cell, so that a conductive tab connecting process becomes complicated and a connecting time is prolonged.

### Summary of the Invention

Embodiments of the invention aim to provide a battery pack, which includes a conductive tab electrically connected to a battery cell using a structure in which the conductive tab is fitted into the battery cell, so that the conductive tab is not melted and broken even with high current and/or over-current, thereby providing the battery pack suitable for achieving large-capacity and high-performance.

It is another feature of an embodiment to provide a battery pack, which includes a conductive tab mounted in a battery cell in a self-aligned manner, so that a separate jig for mounting and welding the conductive tab is not required, thereby providing the battery pack capable of facilitating mounting and welding of the conductive tab. Accordingly, the present invention provides a battery pack including:
first and second battery cells, each including two opposed end surfaces and a terminal support surface extending between the end surfaces, wherein one of the end surfaces of the first battery cell includes a first terminal region having a first terminal thereon and one of the end surfaces of the second battery cell includes a second terminal region having a second terminal thereon; and
a conductive tab including first and second connection regions electrically connected to the first and second terminal regions respectively, first and second contacting regions extending from the first and second connection regions and closely contacting the terminal support surface, a first extension region connecting the first and second connection regions and a second extension region connecting the first and second contacting regions.

Preferred features are set out in claims 2 to 15.

Here, the terminal region of the battery cell may be roughly disk-shaped and the terminal support region may be substantially cylindrical.

The terminal region of the battery cell may be a positive electrode terminal or a negative electrode terminal.

An insulation member may further be disposed between the terminal support region of the battery cell and the contacting region of the conductive tab.

The connection region of the conductive tab may be roughly disk-shaped, the contacting region may be substantially cylindrical, and the first and second extension regions may be shaped of substantially flat plates.

A plurality of welding regions electrically welded to the terminal region of the battery cell may be provided in the connection region of the conductive tab.

One or more throughholes for distributing welding current during the electrically welding of the plurality of welding regions may be provided in the connection region of the conductive tab.

The connection region of the conductive tab may have an area ranging from 1/4 πr² to 3/4 πr² (where r is a radius of the connection region).

One end of the wire may be electrically connected to the first extension region or the second extension region of the conductive tab and the other end of the wire may be electrically connected to the battery monitoring system board.

The second extension region extends from the first extension region in a substantially vertical direction and may extend from the contacting region.

The second extension region extends from the first extension region in a substantially horizontal direction and may be separated from the contacting region.

The second extension region extending from the first extension region in a substantially horizontal direction may be directly electrically connected to the battery monitoring system board.

The second extension region extending from the first extension region in a substantially horizontal direction may pass through the battery monitoring system board to then be soldered.

In embodiments of the present invention, a cup-shaped conductive tab is electrically connected to a battery cell using a structure in which the cup-shaped conductive tab is fitted into the battery cell, so that the conductive tab is not melted and broken even with high current and/or over-current, thereby providing the battery pack suitable for achieving large-capacity and high-performance.

In addition, a cup-shaped conductive tab is mounted in a battery cell in a self-aligned manner, so that a separate jig for mounting and welding the conductive tab is not required, thereby providing the battery pack capable of facilitating mounting and welding of the conductive tab.

### Brief Description of the Drawings

FIGS. 1a, 1b and 1c are a circuit view, a perspective view and a partly exploded perspective view of a battery pack according to an embodiment of the present invention;
FIGS. 2a to 2c are a perspective view, a front view and a rear view illustrating a conductive tab in a battery pack according to an embodiment of the present invention;
FIGS. 3a to 3c are rear views illustrating a conductive tab in a battery pack according to another embodiment of the present invention;
FIGS. 4a to 4c are a perspective view, a front view and a rear view illustrating a conductive tab in a battery pack according to another embodiment of the present invention;
FIGS. 5a to 5c are rear views illustrating a conductive tab in a battery pack according to another embodiment of the present invention;
FIGS. 6a to 6e are perspective views illustrating a method of assembling a battery pack according to another embodiment of the present invention;
FIG. 7 is a partly exploded perspective view of a battery pack according to another embodiment of the present invention;
FIGS. 8a to 8c are a perspective view, a front view and a rear view illustrating a conductive tab in a battery pack according to another embodiment of the present invention; and
FIGS. 9a to 9c are a perspective view, a front view and a rear view illustrating a conductive tab in a battery pack according to another embodiment of the present invention.

### Detailed Description for Carrying out the Invention

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the disclosure to those skilled in the art.

In the drawings, the thickness of layers and regions are exaggerated for clarity. Like numbers refer to like elements throughout. As used herein, the term "and/or" includes any and all combinations of one or more of the associated listed items.

The terminology used herein is for the purpose of describing particular embodiments only and is not intended to be limiting of the invention. As used herein, the singular forms are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that, although the terms first, second, etc. may be used herein to describe various members, elements, regions, layers and/or parts, these members, elements, regions, layers and/or parts should not be limited by these terms. These terms are only used to distinguish one member, element, region, layer and/or part from another member, element, region, layer and/or part. Thus, for example, a first member, element, region, layer and/or part discussed below could be termed a second member, element, region, layer and/or part without departing from the teachings of the present invention.

In addition, the term "conductive tab" used herein means a conductor electrically connected to two battery cells or one battery cell or electrically connecting a battery cell and a battery monitoring system board. Further, the term "conductive tab" used herein means a conductor electrically connected to a battery monitoring system board through a separate wire or directly electrically connected a battery monitoring system board. Additionally, the term "conductive tab" used herein means a conductor coupled to an entire circumference of a cylindrical battery cell or to a partial circumference (arc) of the battery.

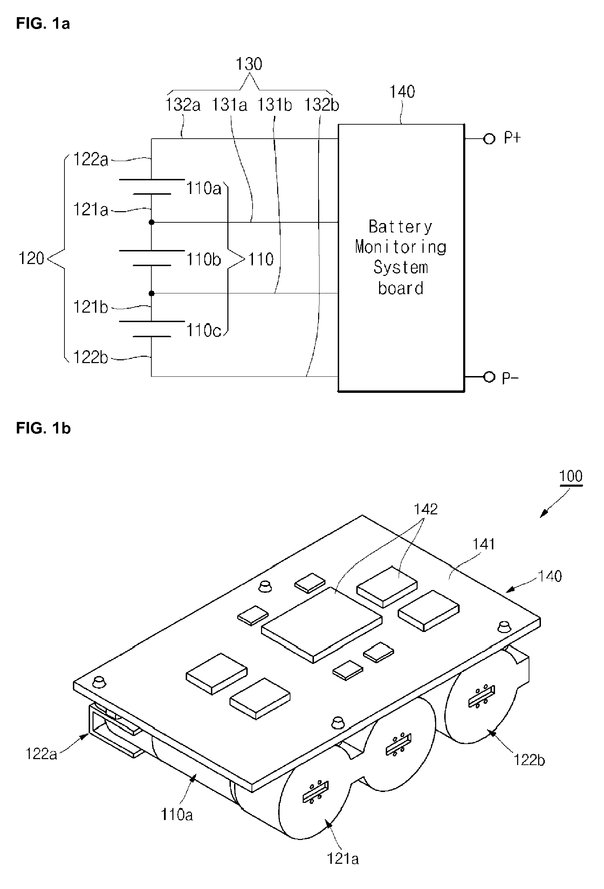

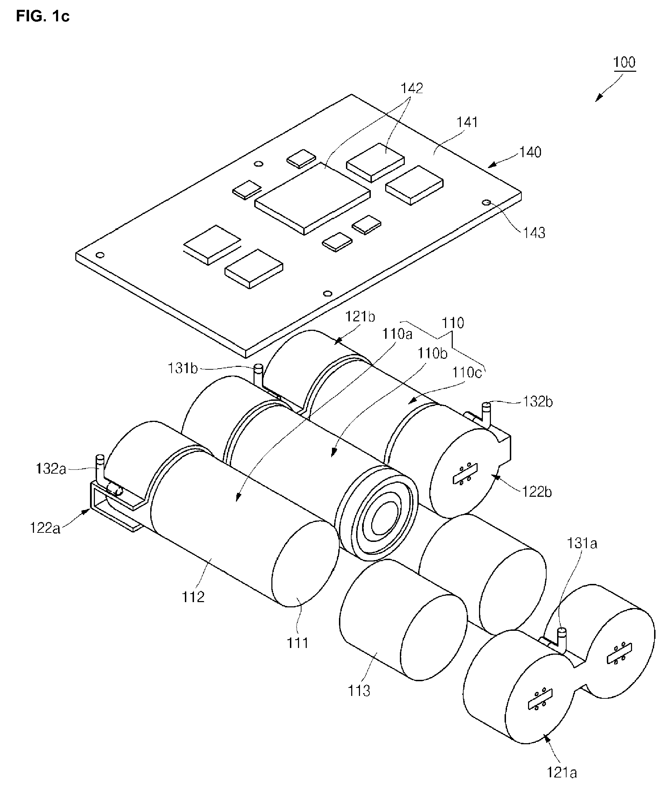

FIGS. 1a, 1b and 1c are a circuit view, a perspective view and a partly exploded perspective view of a battery pack according to an embodiment of the present invention.

As illustrated in FIGS. 1a, 1b and 1c, the battery pack 100 according to an embodiment of the present invention includes a battery cell 110, a conductive tab 120 electrically connected to the battery cell 110, a wire 130 electrically connected to the conductive tab 120, and a battery monitoring system board 140 electrically connected to the wire 130. Although not shown, the battery pack 100 according to an embodiment of the present invention may further include a housing (or a case) accommodating the battery cell 110, the conductive tab 120, the wire 130 and the battery monitoring system board 140.

The battery cell 110 includes a terminal region 111 and a terminal support region 112 extending from the terminal region 111 substantially perpendicular to a surface of the terminal region 111.

Here, the terminal region 111 is roughly disk-shaped and the terminal support region 112 is shaped of a cylinder extending from the terminal region 111 in a substantially perpendicular direction. That is to say, the battery cell 110 is generally cylindrical. However, the present invention does not limit the shape of the battery cell to the cylindrical battery cell, and the battery cell according to the present invention may be a prismatic battery cell or a pouch type battery cell.

In addition, an insulating thermally shrinkable tube (not shown) is coupled to the whole terminal support region 112 and an insulation member 113 shaped of a hollow cylinder may be additionally coupled to a partial region of a surface of the terminal support region 112. Therefore, the terminal region 111 of the battery cell 110 is exposed through the insulating thermally shrinkable tube and the insulation member 113, and when the conductive tab 120 is coupled to the terminal region 111 and the terminal support region 112, the conductive tab 120 is directly electrically connected to only the terminal region 111.

The terminal region 111 is a positive electrode terminal or a negative electrode terminal. In an example, if the terminal region 111 of one side is a positive electrode terminal, the terminal region of the other side is a negative electrode terminal, and vice versa.

In the illustrated embodiment, three battery cells 110 connected to each other in series are exemplified. However, in some cases, three battery cells 110 may be connected to each other in parallel. Of course, the present invention does not limit the number of battery cells 110 connected in series and/or in parallel.

In addition, the battery cell 110 may be one selected from the group consisting of a lithium ion battery, a lithium polymer battery, a lithium iron phosphate battery, a nickel cadmium battery, a nickel manganese hydrogen battery.

The conductive tab 120 is electrically connected to the battery cell 110. In practice, the conductive tab 120 includes first conductive tabs 121 a and 121 b electrically connected to two battery cells 110, and second conductive tabs 122a and 122b electrically connected to one battery cell 110. As illustrated in FIG. 1b, when three battery cells 110 are connected in series, two first conductive tabs 121 a and 121 b and two second conductive tabs 122a and 122b are provided.

For convenient explanation, the battery cell 110 is divided into a first battery cell 110a, a second battery cell 110b and a third battery cell 110c. In addition, first conductive tabs 121 a and 121 b are divided into a first first conductive tab 121 a and a second first conductive tab 121 b, and second conductive tabs 122a and 122b are divided into a first second conductive tab 122a and a second second conductive tab 122b.

The first first conductive tab 121 a electrically connects the terminal region 111 of the first battery cell 110a (e.g., a negative electrode terminal) to the terminal region 111 of the second battery cell 110b (e.g., a positive electrode terminal). In addition, the second first conductive tab 121 b electrically connects the terminal region 111 of the second battery cell 110b (e.g., a negative electrode terminal) to the terminal region 111 of the third battery cell 110c (e.g., a positive electrode terminal).

The wire 130 electrically connects the battery cell 110 to the battery monitoring system board 140 and includes a first first wire 131 a and a second first wire 131 b and a second first wire 132a and a second second wire 132b.

The first first wire 131 a electrically connects the first first conductive tab 121 a to the battery monitoring system board 140, and the second first wire 131 b electrically connects the second first conductive tab 121 b to the battery monitoring system board 140. Here, the first first wire 131 a is a sensing wire for sensing a voltage of the second battery cell 110b, and the second first wire 131 b is a sensing wire for sensing a voltage of the third battery cell 110c.

The first second wire 132a electrically connects the first second conductive tab 122a, that is, the terminal region 111 of the first battery cell 110a (e.g., a positive electrode terminal) to the battery monitoring system board 140, and the second second wire 132b electrically connects the second second conductive tab 122b, that is, the terminal region 111 of the third battery cell 110c (e.g., a negative electrode terminal) to the battery monitoring system board 140. Here, the first second wire 132a and the second second wire 132b correspond to high current paths or over-current paths through which charge current and discharge current of the battery pack 100 may flow or may allow the battery monitoring system board 140 to sense the overall voltage of the battery pack 100. The first second wire 132a may also serve as a sensing wire for sensing a voltage of the first battery cell 110a. in addition, the second second wire 132b may also serve as a sensing wire for sensing a ground voltage of the battery pack 100.

The battery monitoring system board 140 is mounted on the plurality of battery cells 110 with an insulation member (not shown) disposed therebetween, and monitors the voltages, currents and temperatures of the battery cells 110. To this end, the battery monitoring system board 140 includes a printed circuit board 141 and a plurality of electric/electronic devices 142 mounted on the printed circuit board 141. In addition, a plurality of conductive vias 143 are formed in the printed circuit board 141, and the wire 130 is inserted into and soldered to the conductive vias 143.

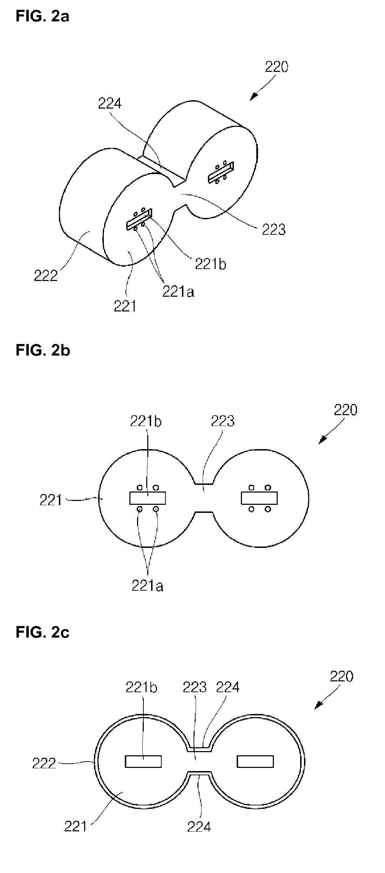

FIGS. 2a to 2c are a perspective view, a front view and a rear view illustrating a conductive tab in a battery pack according to an embodiment of the present invention.

Hereinafter, for convenient explanation, new reference numerals are used to describe a conductive tab in a battery pack according to an embodiment of the present invention, which is to be understood as being substantially the same as the conductive tab illustrated in FIGS. 1a to 1c.

As illustrated in FIGS. 2a to 2c, the conductive tab 220 includes a connection region 221 electrically connected to a terminal region 111 of a battery cell 110, a contacting region 222 extending from the connection region 221 in a substantially perpendicular direction and closely contacting the terminal support region 112 of the battery cell 110, a first extension region 223 outwardly extending from the connection region 221, and a second extension region 224 extending from the first extension region 223 and the contacting region 222. Here, the conductive tab 220 connects two battery cells 110 to each other in parallel or in series. Therefore, the connection region 221 and the contacting region 222 are symmetrically formed at opposite sides of the first and second extension regions 223 and 224. That is to say, the connection region 221 and the contacting region 222 of the conductive tab 220 are formed at opposite sides of the first and second extension regions 223 and 224.

The conductive tab 220 may be made of one selected from the group consisting of aluminum, an aluminum alloy, copper, a copper alloy, nickel, a nickel alloy, iron, an iron alloy.

The connection region 221 of the conductive tab 220 is substantially disk-shaped, like the terminal region 111 of the battery cell 110. However, a diameter of the connection region 221 is slightly larger than a diameter of the terminal region 111. In addition, a plurality of welding regions 221 a electrically welded to the terminal region 111 of the battery cell 110 may be provided in the connection region 221. In addition, one or more throughholes 221 b for distributing welding current without being concentrated during the electrically welding of the plurality of welding regions may be provided in the connection region 221.

The contacting region 222 of the conductive tab 220 is substantially cylindrical, like the terminal support region 112 of the battery cell 110. However, a diameter of the contacting region 222 is slightly larger than a diameter of the terminal support region 112. In addition, since the contacting region 222 closely contacts the insulation member 113 surrounding the terminal support region 112 of the battery cell 110, it is not electrically connected to the terminal support region 112 of the battery cell 110. Therefore, the positive and negative electrode terminals of the same battery cell 110 are not simultaneously short-circuited by the contacting region 222 of the conductive tab 220.

Since the contacting region 222 is formed to extend from the connection region 221, it increases the overall area of the conductive tab 220, thereby allowing relatively high current and/or over-current to flow. Therefore, the conductive tab 220 according to the present invention is suitably used for large-capacity, high-performance battery pack. In addition, the contacting region 222 allows the conductive tab 220 to be stably mounted in the terminal region 111 and the terminal support region 112 of the battery cell 110 with the connection region 221 during welding of the conductive tab 220, so that a separate jig for mounting the conductive tab 220 and/or a separate jig for connecting the conductive tab 220 may not be required.

Meanwhile, a length of the contacting region 222 is preferably less than half the overall length of the battery cell 110 (that is, the overall length of the terminal support region 112). In such a manner, one-side conductive tab 220 coupled to the terminal region 111 of one side and the other-side conductive tab 220 coupled to the terminal region 111 of the other side may not be electrically short-circuited.

The first extension region 223 is shaped of a flat plate extending in a substantially horizontal direction and outwardly from the connection region 221. A width of the first extension region 223 may be equal to or smaller than a diameter of the connection region 221. In the illustrated embodiment, the width of the first extension region 223 is smaller than the diameter of the connection region 221, but aspects of the present invention are not limited thereto.

The second extension region 224 is shaped of a flat plate extending in a substantially vertical direction and outwardly from the first extension region 223. In practice, the second extension region 224 is shaped of a flat plate outwardly extending from both of the contacting region 222 and the first extension region 223. A width of the second extension region 224 may be equal to or smaller than a diameter of the contacting region 222. In addition, the second extension region 224 may be formed at opposite sides (for example, at upper and lower sides) of the first extension region 223. Further, the second extension region 224 may be interposed between two battery cells 110.

In such a manner, the overall width of the first and second extension regions 223 and 224, in which current flows from one battery cell 110 to another battery cell 110, may be equal to or smaller than the overall width of the connection region 221 and the contacting region 222. Accordingly, even if relatively high current and/or over-current flows through the first and second extension regions 223 and 224, the first and second extension regions 223 and 224 may not be melted or broken.

As described above, the conductive tab 220 according to the present invention has a larger area than the terminal region 111 of the battery cell 110, so that it may be suitably used for large-capacity, high-performance battery pack. In addition, since the conductive tab 220 according to the embodiment of the present invention can be stably mounted in the battery cell 110 in a self-aligned manner, a separate jig for mounting and welding the conductive tab 220 is not required, thereby facilitating mounting and welding of the conductive tab 220.

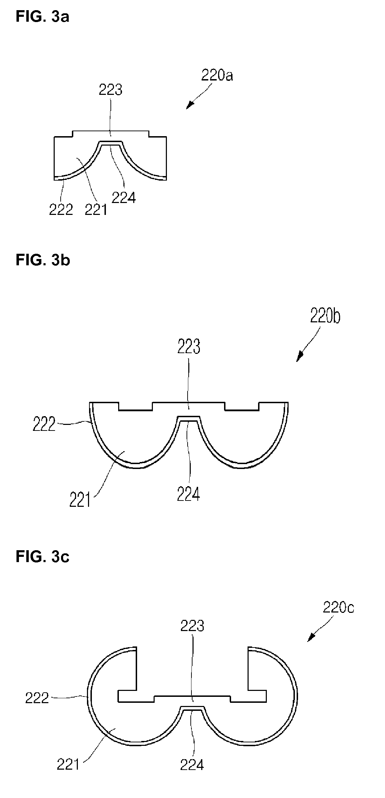

FIGS. 3a to 3c are rear views illustrating a conductive tab in a battery pack according to another embodiment of the present invention.

As illustrated in FIG. 3a, a connection region 221 of a conductive tab 220a has an area of approximately 1/4 πr². As illustrated in FIG. 3b, a connection region 221 of a conductive tab 220b has an area of approximately 1/2 πr². As illustrated in FIG. 3c, a connection region 221 of a conductive tab 220c has an area of approximately 3/4 πr². Here, r is a radius of the connection region. In addition, the connection region 221 of the conductive tab 220 may have various areas. Each of the conductive tabs 220 shown in FIGS. 3a to 3c has a contacting region 222 extending from the connection region 221 in a substantially perpendicular direction.

Therefore, in the conductive tabs 220a, 220b and 220c, since the connection region 221 is connected to the terminal region 111 of the battery cell 110 and the contacting region 222 closely contacts a terminal support region 112 of the battery cell 110, a current flowing area is increased, and a separate jig for mounting and welding the conductive tab 220 is not required during an assembling process.

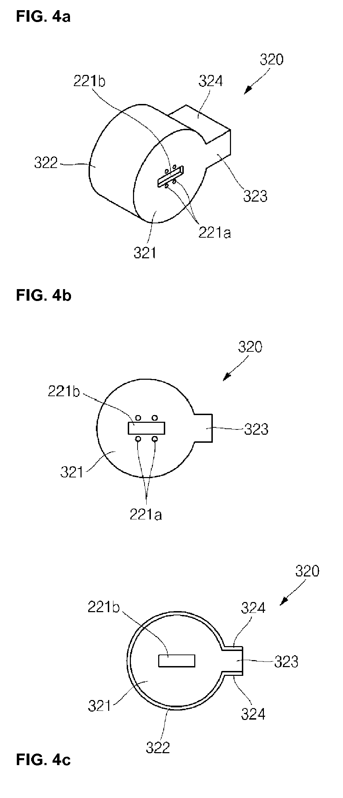

FIGS. 4a to 4c are a perspective view, a front view and a rear view illustrating a conductive tab in a battery pack according to another embodiment of the present invention.

As illustrated in FIGS. 4a to 4c, the conductive tab 320 in a battery pack according to another embodiment of the present invention includes a connection region 321 electrically connected to a terminal region 111 of a battery cell 110, a contacting region 322 extending from the connection region 321 in a substantially perpendicular direction and closely contacting a terminal support region 112 of the battery cell 110, a first extension region 323 outwardly extending from the connection region 321, and a second extension region 324 extending from the first extension region 323 and the contacting region 322. Here, the conductive tab 320 is electrically connected to one battery cell 110. That is to say, unlike the conductive tab 220 shown in FIGS. 2a to 2c, in which the connection region 321 and the contacting region 322 are symmetrically formed at opposite sides of the first and second extension regions 223 and 224, the conductive tab 320 shown in FIGS. 4a to 4c includes only one connection region 321 and only one contacting region 322 formed at one side of the first and second extension regions 223 and 224. The conductive tab 320 shown in FIGS. 4a to 4c is substantially the same as the conductive tab 220 shown in FIGS. 2a to 2c in view of structure and material, except that the conductive tab 320 shown in FIGS. 4a to 4c has only one connection region 321 and only one contacting region 322, and additional explanations will be omitted.

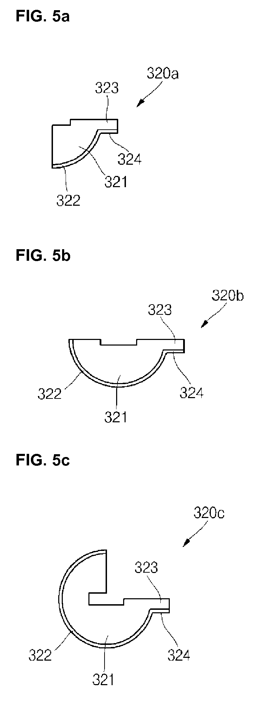

FIGS. 5a to 5c are rear views illustrating a conductive tab in a battery pack according to another embodiment of the present invention.

As illustrated in FIG. 5a, a connection region 321 of a conductive tab 320a has an area of approximately 1/4 πr². As illustrated in FIG. 5b, a connection region 321 of a conductive tab 320b has an area of approximately 1/2 πr². As illustrated in FIG. 5c, a connection region 321 of a conductive tab 320c has an area of approximately 3/4 πr². Like in the previous embodiment, the conductive tabs 320a, 320b and 320c shown in FIGS. 5a to 5c is substantially the same as the conductive tabs 220a, 220b and 220c shown in FIGS. 4a to 4c in view of structure and material, except that each of the conductive tabs 320a, 320b and 320c has only one connection region 321 and only one contacting region 322, and additional explanations will be omitted.

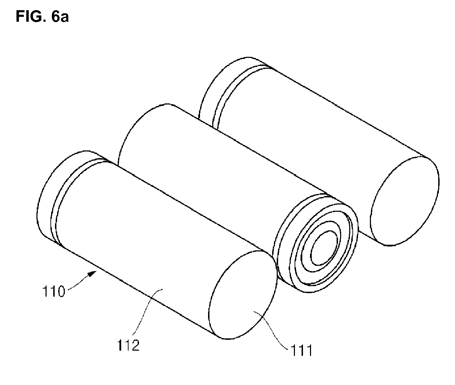

FIGS. 6a to 6e are perspective views illustrating a method of assembling a battery pack according to another embodiment of the present invention.

As illustrated in FIG. 6a, a plurality of battery cells 110 each including a substantially disk-shaped terminal region 111 and a substantially cylindrical terminal support region 112 extending from the terminal region 11 in a substantially perpendicular direction are arranged in a line. Here, the terminal region 111 may be a positive electrode terminal or a negative electrode terminal.

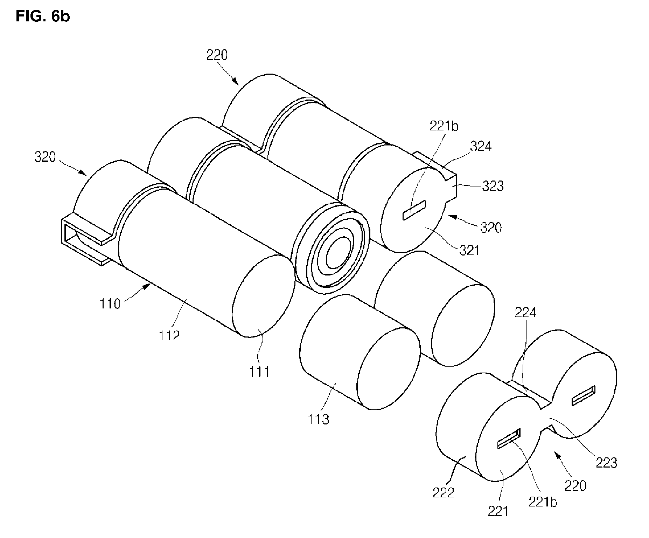

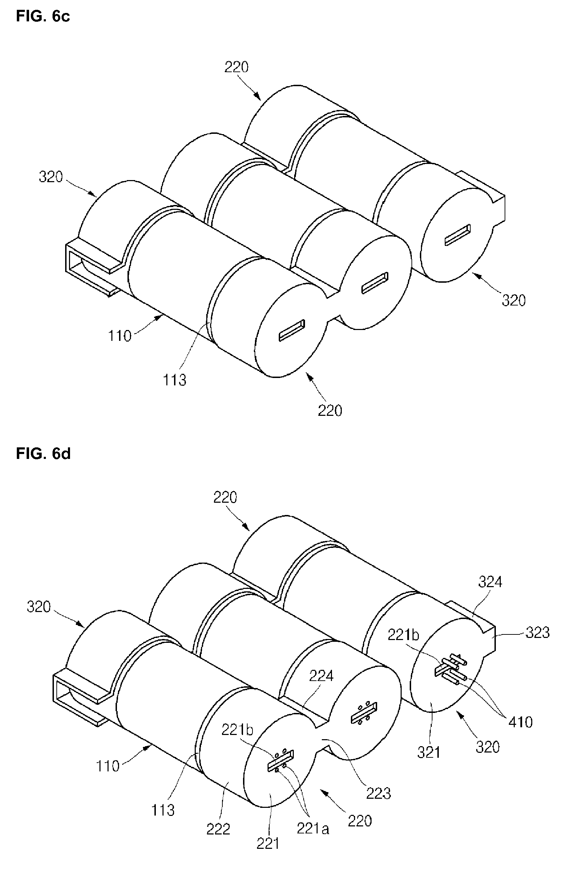

As illustrated in FIGS. 6b and 6c, an insulation member 113 is coupled to a terminal support region 112 of the battery cell 110 and only the terminal region 111 is exposed to the outside, the conductive tab 220 including a connection region 221, a contacting region 222, and first and second extension regions 223 and 224 is coupled to the battery cell 110. That is to say, the connection region 221 of the conductive tab 220 is made to contact the terminal region 111 of the battery cell 110, and the contacting region 222 of the conductive tab 220 is made to closely contact the terminal support region 112 of the battery cell 110.

In addition, symmetrically formed conductive tabs 220 are coupled to two battery cells 110 connected in series or in parallel, and an asymmetrically formed conductive tab 320 is coupled to the battery cells 110.

As illustrated in FIG. 6d, conductive tabs 220 and 320 are electrically connected to the battery cell 110 by welding tools 410. That is to say, the welding tools 410 are disposed to face each other about throughholes 221 b provided in the connection regions 221 and 321 of the conductive tabs 220 and 320, and welding current is then applied to the welding tools 410, thereby forming a plurality of welding regions 221 a at opposite positions of the throughholes 221 b provided in the conductive tabs 220 and 320. Here throughholes 221 b serve to distribute welding current, thereby preventing the conductive tabs 220 and 320 or the battery cell 110 from being damaged.

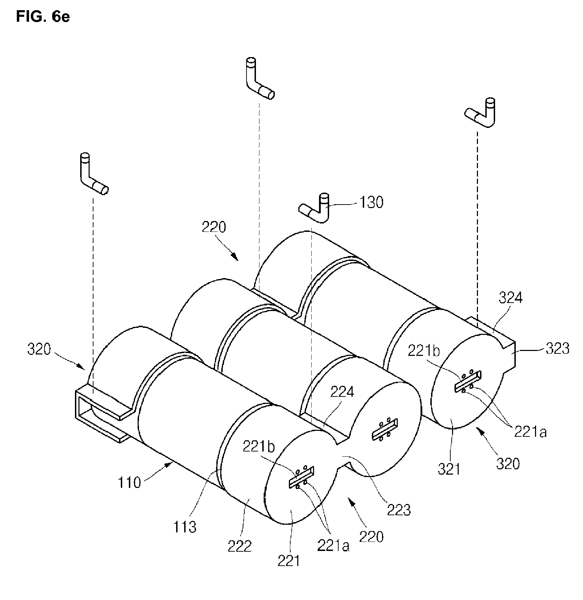

As illustrated in FIG. 6e, one end of the wire 130 is welded to each of the second extension regions 224 and 324 provided in the conductive tabs 220 and 320. Here, one end of the wire 130 may also be welded to each of the connection regions 221 and 321, the contacting regions 222 and 322 or the first extension regions 223 and 323 provided in the conductive tabs 220 and 320.

Lastly, although not shown, each wire 130 is electrically connected to the battery monitoring system board 140. In one embodiment, the wire 130 is coupled to each of the conductive vias 143 provided in the battery monitoring system board 140 and then soldered.

In such a manner, according to the embodiment of the present invention, the conductive tab can be stably mounted in the battery cell in a self-aligned manner, a separate jig for mounting and welding the conductive tab is not required, thereby facilitating mounting and welding of the conductive tab.

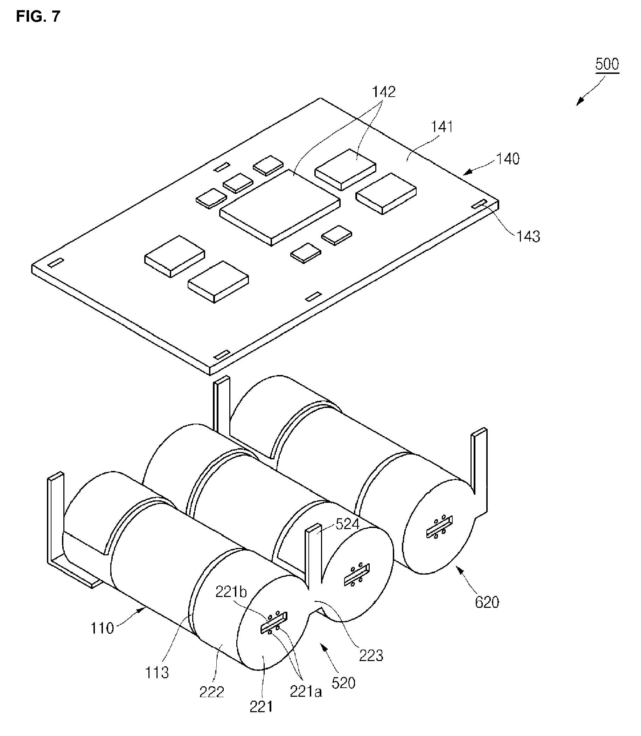

FIG. 7 is a partly exploded perspective view of a battery pack according to another embodiment of the present invention.

As illustrated in FIG. 7, in the battery pack 500 according to another embodiment of the present invention, a conductive tab 520 is directly electrically connected to a battery monitoring system board 140 without a separate wire. For example, among various components of the conductive tab 520, at least one second extension region 524 is separated from a contacting region 222 and outwardly extends in substantially parallel to a first extension region 223. That is to say, the second extension region is provided at upper and lower portions of the first extension region 223, and the upper second extension region 524 is detached from the contacting region 222 and is bent upwardly such that the second extension region 524 extends substantially parallel to the first extension region 223. However, the second extension region 524 may extend with various angles with respect to the first extension region 223 according to positions of the conductive vias 143 formed in the battery monitoring system board 140. In some cases, the second extension region 524 may be bent at various angles from a predetermined position.

As described above, the conductive vias 143 are formed in the battery monitoring system board 140 corresponding to the second extension region 524, and the second extension region 524 is coupled to the conductive vias 143 and then soldered.

Therefore, in the battery pack 500 according to the present invention; the conductive tab 520 is directly electrically connected to the battery monitoring system board 140 without a separate wire, thereby simply and easily establishing an electrical connection process of the battery cell 110 and the battery monitoring system board 140. In addition, since no additional wire is provided between the conductive tab 520 and the battery monitoring system board 140, the electrical resistance therebetween is small, thereby minimizing an area where heat is generated when high current and/or over-current flows between the battery cell and the battery monitoring system board.

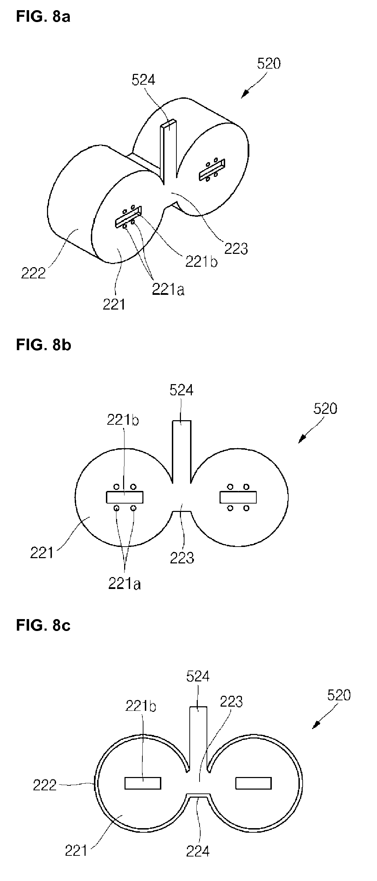

FIGS. 8a to 8c are a perspective view, a front view and a rear view illustrating a conductive tab in a battery pack according to another embodiment of the present invention.

As illustrated in FIGS. 8a to 8c, in the battery pack according to another embodiment of the present invention, a conductive tab 520 may be used in electrically connecting two battery cells 110. As described above, second extension regions are formed at upper and lower portions of a first extension region 223, and the upper second extension region 524 is separated from contacting regions 222 extends outwardly. That is to say, the second extension region 524 upwardly extends and is substantially parallel to the first extension region 223.

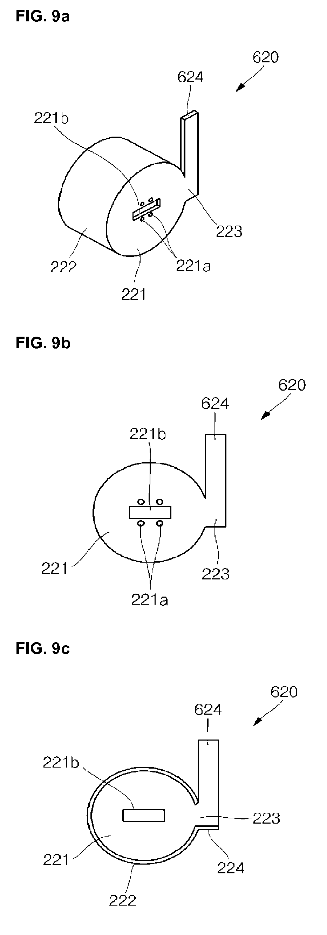

FIGS. 9a to 9c are a perspective view, a front view and a rear view illustrating a conductive tab in a battery pack according to another embodiment of the present invention.

As illustrated in FIGS. 9a to 9c, a conductive tab 620 is electrically connected to one battery cell 110. As described above, in view of a first extension region 223, an upper second extension region 524 is separated from one contacting region 222 and extends upwardly. In addition, the second extension region 524 is substantially parallel to the first extension region 223.

In addition, although not shown, the conductive tab 520 shown in FIGS. 8a to 8c and the conductive tab 620 shown in FIGS. 9a to 9c may include a connection region having an area of approximately 1/4 πr² to 3/4 πr², like the conductive tab shown in FIGS. 3a to 3c and/or the conductive tab shown in FIGS. 5a to 5c.

As described above, in the battery pack according to the embodiment of the present invention, since a cup-shaped conductive tab electrically connected to a battery cell using a structure in which the cup-shaped conductive tab is fitted into the battery cell, the conductive tab is not melted and broken even with high current and/or over-current, thereby providing the battery pack suitable for achieving large-capacity and high-performance.

In addition, in the battery pack according to the embodiment of the present invention, since a cup-shaped conductive tab mounted in a battery cell in a self-aligned manner, a separate jig for mounting and welding the conductive tab is not required, thereby providing the battery pack capable of facilitating mounting and welding of the conductive tab.

While the battery pack of the invention has been described in connection with a certain exemplary embodiment, it will be understood by those skilled in the art that the invention is not limited to the disclosed embodiment, but rather is intended to cover various modifications included within the scope of the appended claims.

## Claims

1. A battery pack including:
first and second battery cells, each including two opposed end surfaces and a terminal support surface extending between the end surfaces, wherein one of the end surfaces of the first battery cell includes a first terminal region having a first terminal thereon and one of the end surfaces of the second battery cell includes a second terminal region having a second terminal thereon; and
a conductive tab including first and second connection regions electrically connected to the first and second terminal regions respectively, first and second contacting regions extending from the first and second connection regions and closely contacting the terminal support surface, a first extension region (223) connecting the first and second connection regions and a second extension region (224) connecting the first and second contacting regions.

2. A battery pack according to claim 1, wherein the terminal support surface is a cylindrical terminal support surface.

3. A battery pack according to claim 2, wherein the first and second contacting regions have an arcuate surface shaped to correspond to at least a portion of the cylindrical terminal support surface.

4. A battery pack according to claim 2 or 3, wherein the connection regions of the conductive tab are disk-shaped, the contacting regions are cylindrical, and the first and second extension regions are flat plates.

5. A battery pack according to claim 2 or 3, wherein each connection region is shaped as a section of a disk of radius r, having an area ranging from 1/4 πr² to 3/4 πr².

6. A battery pack according to any one of the preceding claims, comprising an insulation member disposed between the terminal support surface of each battery cell and the respective contacting region of the conductive tab.

7. A battery pack according to any one of the preceding claims, wherein each connection region comprises a plurality of welding regions welded to the terminal region of the battery cell.

8. A battery pack according to claim 7, wherein each welding region comprises one or more throughholes (221 a).

9. A battery pack according to any one of the preceding claims, wherein each contacting region has a length less than half of the length of the terminal support surface.

10. A battery pack according to any claim dependent on claim 2, wherein the first extension region is shaped as a flat plate extending between the first and second connection regions, and has a width less than the diameter of the cylindrical terminal support surface.

11. A battery pack according to any one of the preceding claims, further comprising a wire (131a, 131b) electrically connected to the second extension region of the conductive tab and a battery monitoring system board electrically connected to the wire.

12. A battery pack according to any one of claims 1 to 10, further comprising an upper second extension region (524) extending from the first extension region (223) and a battery monitoring system board electrically connected to the upper second extension region.

13. A battery pack according to any one of the preceding claims, wherein the battery pack includes a third battery cell including two opposed end surfaces and a terminal support surface extending between the end surfaces, wherein one of the end surfaces of the third battery cell includes a third terminal region having a third terminal thereon; and
a second conductive tab including a third connection region electrically connected to the third terminal region, and a third contacting region extending from the third connection region and closely contacting the terminal support surface.

14. A battery pack according to claim 13, wherein the second conductive tab includes a third extension region extending from the third connection region and a fourth extension region extending from the third contacting region.

15. A battery pack according to claim 13 or 14, wherein the first, second and third battery cells are arranged and connected in series by the first and second conductive tabs.
